# EUROPEAN PATENT APPLICATION

(11) **EP 3 515 144 A1**
(43) Date of publication of application: **24.07.2019**
(21) Application number: 17856404.3
(22) Date of filing: 29.09.2017
(51) Int. Cl.: H04W 72/04, H04W 28/04, H04W 74/08

(54) **USER TERMINAL AND WIRELESS COMMUNICATION METHOD**

(30) Priority: 29.09.2016 JP 2016192023
(71) Applicant: NTT DOCOMO, INC., Chiyoda-ku Tokyo 100-6150 (JP)
(72) Inventor: TAKEDA, Kazuaki, Tokyo 100-6150 (JP); TAKEDA, Kazuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2017/035385
(87) International publication number: WO 2018/062455

(57) **Abstract**

To perform communication using proper CSS also in future radio communication systems, a user terminal according to one aspect of the present invention is characterized by having a control section that determines a resource of a given common search space based on information on a resource amount of the common search space, and a receiving section that monitors a downlink control channel in at least a part of the resource of the given common search space.

## Description

### Technical Field

The present invention relates to a user terminal and radio communication method in the next-generation mobile communication system.

### Background Art

In UMTS (Universal Mobile Telecommunications System) networks, for the purpose of higher data rates, low delay and the like, Long Term Evolution (LTE) has been specified (Non-patent Document 1). Further, for the purpose of wider bands and higher speed than LTE (also referred to as LTE Rel.8 or 9), LTE-A (LTE-Advanced, also referred to as LTE Rel.10, 11 or 12) has been specified, and successor systems (e.g., also referred to as FRA (Future Radio Access), 5G (5th generation mobile communication system), NR (New Radio), NX (New radio access), FX (Future generation radio access), LTE Rel.13, 14 or 15 onward, etc.) to LTE have also been studied.

In LTE Rel.10/11, in order to widen the band, introduced is Carrier Aggregation (CA) for aggregating a plurality of component carriers (CC: Component Carrier). Each CC is configured with a system band of LTE Rel.8 as one unit. Further, in CA, a plurality of CCs of the same radio base station (e.g., called eNB (evolved NodeB), BS (Base Station), etc.) is configured for a user terminal (UE: User Equipment).

On the other hand, in LTE Rel.12, Dual Connectivity (DC) is also introduced where a plurality of cell groups (CG: Cell Group) of different radio base stations is configured for a UE. Each cell group is comprised of at least a single cell (CC). In DC, since a plurality of CCs of different radio base stations is aggregated, DC is also called inter-base station CA (Inter-eNB CA) and the like.

Further, in LTE Rel8-12, introduced is Frequency Division Duplex (FDD) for performing downlink (DL) transmission and uplink (UL) transmission in different frequency bands, and Time Division Duplex (TDD) for switching between downlink transmission and uplink transmission temporally in the same frequency band to perform.

### Citation List

### Non-Patent Literature

[Non-patent Literature 1] 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (e.g., 5G, NR), it is expected to actualize various radio communication services so as to meet respective different requirements (e.g., ultra-high speed, high capacity, high reliability, ultra-low delay, etc.).

For example, in NR, it is studied to offer radio communication services called eMBB (enhanced Mobile Broad Band), mMTC (massive Machine Type Communication), URLLC (Ultra Reliable and Low Latency Communications) and the like.

In existing LTE, common search space (CSS) comprised of beforehand determined certain radio resources is used to transmit common information to UEs. However, in NR having the possibility of offering various services, when fixed resources are used for CSS, there is the risk that it is not possible to perform proper communication. In this case, problems such as reduction in communication throughput and increases in power consumption of a UE occur.

The present invention was made in view of such a respect, and it is an object of the invention to provide a user terminal and radio communication method capable of performing communication using proper CSS, also in future radio communication systems.

### Solution to Problem

A user terminal according to one aspect of the present invention is characterized by having a control section that determines a resource of a given common search space based on information on a resource amount of the common search space, and a receiving section that monitors a downlink control channel in at least a part of the resource of the given common search space.

### Advantageous Effects of Invention

According to the present invention, also in future radio communication systems, it is possible to perform communication using proper CSS.

### Brief Description of Drawings

FIGs. 1A and 1B are diagrams showing one example of BF operation expected in NR;
FIGs. 2A and 2B are diagrams showing one example of problems caused in association with a resource amount of CSS;
FIGs. 3A and 3B are diagrams showing one example of configuration of resource amounts of CSS according to Embodiment 1;
FIG. 4 is a diagram showing one example of configuration of limitation of CSS targeted for monitoring according to Embodiment 2;
FIG. 5 is a diagram showing one example of a schematic configuration of a radio communication system according to one Embodiment of the present invention;
FIG. 6 is a diagram showing one example of an entire configuration of a radio base station according to one Embodiment of the invention;
FIG. 7 is a diagram showing one example of a function configuration of the radio base station according to one Embodiment of the invention;
FIG. 8 is a diagram showing one example of an entire configuration of a user terminal according to one Embodiment of the invention;
FIG. 9 is a diagram showing one example of a function configuration of the user terminal according to one Embodiment of the invention; and
FIG. 10 is a diagram showing one example of hardware configurations of the radio base station and user terminal according to one Embodiment of the invention.

### Description of Embodiments

In 5G, usage of beam forming (BF) is studied. The BF is one example of techniques using precoding. The precoding is a method of performing proper phase and/or amplitude adjustments on a transmission signal. For example, based on propagation path information notified from the reception side, the transmission side applies a proper weight (precoding weight) to a transmission signal, and is thereby capable of improving received quality.

For example, the BF is techniques for controlling the amplitude and/or phase of a signal transmitted/received to/from each element by using an ultra-multi-element antenna, and thereby forming a beam (antenna directivity). In addition, MIMO (Multiple Input Multiple Output) using such an ultra-multi-element antenna is also called Massive MIMO. By BF, it is possible to reduce difficulty in securing coverage associated with increases in carrier frequency, and to decrease radio wave propagation loss.

It is possible to classify BF into digital BF and analog BF. The digital BF is a method of performing precoding signal processing (on a digital signal) on baseband. In this case, parallel processing of Inverse Fast Fourier Transform (IFFT)/Digital to Analog Converter (DAC)/RF (Radio Frequency) is required corresponding to the number of antenna ports (or RF chains). On the other hand, at any timing, it is possible to form the number of beams corresponding to the number of RF chains.

The analog BF is a method using a phase shift device on RF. In this case, since the phase of an RF signal is only rotated, the configuration is easy and is capable of being actualized at low cost, but it is not possible to form a plurality of beams at the same timing.

In addition, it is also possible to actualize a hybrid BF configuration with the digital BF and analog BF combined. In the future radio communication system (e.g., NR), it is studied to introduce massive MIMO, but when beam forming with the enormous number of beams is performed only by the digital BF, the circuit configuration is expensive. Therefore, in NR, it is expected to use the hybrid BF configuration.

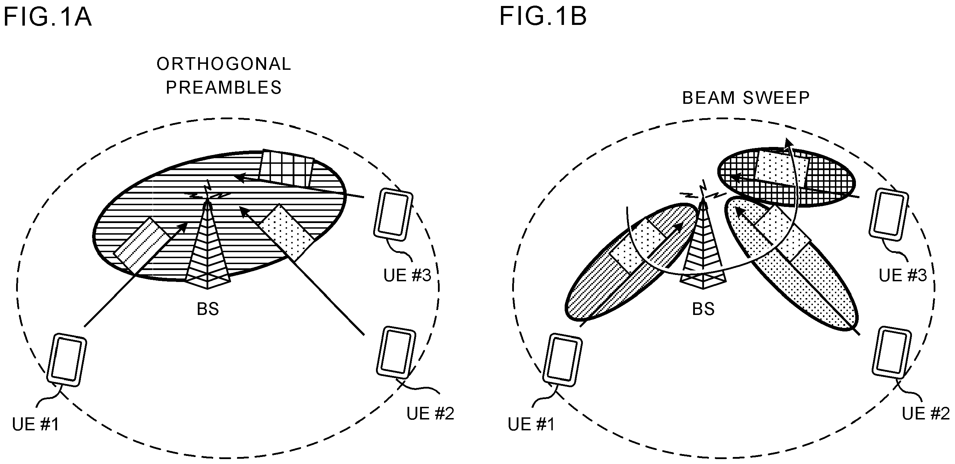

In NR, some operation forms are expected, corresponding to the number of beams used in a radio base station. FIG. 1 contains diagrams showing one example of BF operation expected in NR. FIG. 1 shows the example where three UEs (UE#1 to UE#3) transmit, to the base station, signals (e.g., RA preamble, RACH (RA channel) preamble, PRACH (Physical RACH) preamble, simply called preamble, etc.) for random access (RA) as uplink signals.

In addition, the number of UEs communicating with the bae station is not limited "3", and may be any number. Further, in NR, the base station connecting to the next-generation core network (NextGen Core) may be called gNB.

FIG. 1A shows one example of single BF operation where the base station uses one beam. The single BF operation is an operation method similar to existing LTE. In FIG. 1A, the base station is capable of receiving signals transmitted toward a reception range (elliptical region shown by the solid line) by one beam. It may be assumed that the elliptical region corresponds to one cell (CC).

When preambles are transmitted in the same radio resource, contention (interference) occurs (it is not possible to determine the UE which transmits the preamble.) Therefore, in the single BF operation, different preambles (orthogonal preambles) are transmitted for each UE. Accordingly, in order to enable many UEs to perform random access, many orthogonal preambles are required.

FIG. 1B shows one example of multiple BF operation where the base station uses a plurality of beams. In the multiple BF operation, it is possible to use the BF to suppress contention of signals. In FIG. 1B, the radio base station applies beam sweeping to reception beams (elliptical regions shown by the solid lines) (shifts, switches with time). In FIG. 1B, three reception beams with different directions are subjected to beam sweeping.

In the multiple BF operation, more PRACH resources are required in the time domain, but it is possible to decrease the number of orthogonal preambles. In the example in FIG. 1B, the UE#1 to UE#3 transmit the same preamble in different time resources, and the base station is capable of distinguish the preamble received from each UE.

In addition, the flow of initial access (e.g., transition from idle (RRC_IDLE) state to RRC (Radio Resource Control) connected (RRC_CONNECTED) state) in NR is expected as described below, for example. First, a UE searches for a synchronization signal (PSS (Primary Synchronization Signal), SSS (Secondary Synchronization Signal), etc.) on a predetermined synchronization signal raster. For example, the synchronization signal raster indicates frequency resources configured to enable the synchronization signal to be mapped at predetermined frequency intervals, and may be defined by specifications. After detecting one or a plurality of synchronization signals, the UE interprets a broadcast channel (PBCH: Physical Broadcast Channel), and recognizes the cell.

The UE receives system information (SIB: System Information Block), and acquires information required for communication in the cell. In addition, the resource used in transmission of the SIB may be notified on the PBCH, or may be dynamically scheduled with downlink control information (e.g., DCI).

Then, the UE starts an RA procedure, selects one from among a plurality of RA preambles identified by PRACH configuration information, for example, randomly or according to a predetermined rule, and transmits the selected RA preamble on the PRACH (message 1). As in LTE, the base station may configure resources of RA preambles for the UE, by broadcast information (MIB: Master Information Block), SIB, etc.).

After transmitting the RA preamble, the base station and UE transmit and receive messages to/from each other a plurality of times. For example, upon detecting the RA preamble, the base station transmits a random access response (RAR) as a response thereto (message 2).

The UE receiving the RAR adjusts transmission timing of UL, based on timing advance (TA) included in the RAR, and establishes synchronization on UL. Further, in UL resources designated by UL grant included in the RAR, the UE transmits a control message of a higher layer (L2/L3: Layer 2/Layer 3) (message 3). The control message includes a UE identifier (UE-ID). For example, the UE identifier may be C-RNTI (Cell-Radio Network Temporary Identifier) when the UE is in the RRC connected state, or may be UE-ID of higher layer such as S-TMSI (System Architecture Evolution-Temporary Mobile Subscriber Identity) when the UE is in the idle state.

In response to the control message of higher layer, the base station transmits a contention resolution message (message 4). The contention resolution message is transmitted based on the identifier of the UE included in the control message. The UE succeeding in detecting the contention resolution message transmits an acknowledgement (ACK: Acknowledge) in HARQ (Hybrid Automatic Repeat reQuest) to the radio base station. By this means, the UE in the idle state transits to the RRC connected state.

In addition, the RA procedure may be performed in the case where the UE is in the RRC connected state, but UL synchronization is not established (e.g., start or restart of UL transmission) and the like.

In the RA procedure, the UE monitors common search space (CSS) of predetermined downlink control channels, and receives downlink control information (e.g., DCI). Herein, "monitor" refers to attempting to decode each downlink control channel with respect to a target DCI format in a set of the predetermined number of downlink control channel candidates. Such decoding is also called blind decoding (BD), and blind detection. The downlink control channel candidate is also called a BD candidate, PDCCH (Physical Downlink Control Channel) candidate, EPDCCH (Enhanced PDDCH) candidate and the like.

The search space (SS) indicates a set of downlink control channel candidates to monitor. For the purpose of link adaptation, in the SS, a plurality of aggregation levels (AL) may be defined. The AL corresponds to the number of control channel elements (CCE: Control Channel Element)/the number of Enhanced Control Channel Elements (ECCE: Enhanced CCE) constituting the DCI. Further, in some AL, the SS may be configured to have a plurality of downlink control channel candidates.

The CSS may be cell-specific search space (common to all UEs in the cell), or may be search space common to a plurality of particular UEs (e.g., predetermined UE group). Further, for example, the above-mentioned predetermined downlink channel may be at least one of PDCCH, EPDCCH, MPDCCH (MTC PDCCH), NB-PDCCH (Narrow Band PDCCH) and the like, or may be a control channel newly defined for NR.

The UE may receive, in the CSS, the downlink control information for scheduling at least one of message 2 (RAR), retransmission of message 3, and message 4. By scheduling using the downlink control information, even in the case where the transport block size used in message transmission varies, the UE is capable of properly performing reception processing.

In addition, the UE may receive, in the CSS, downlink control information for a paging message (paging information), system information, uplink transmit power control (TPC) command the like.

Information on resources (hereinafter, also simply referred to as resources of CSS, CSS resources, etc.) for CSS is preferably notified to (configured for) the UE by broadcast information. For example, information on a resource position of CSS may be transmitted by SIB, or may be transmitted by MIB (PBCH).

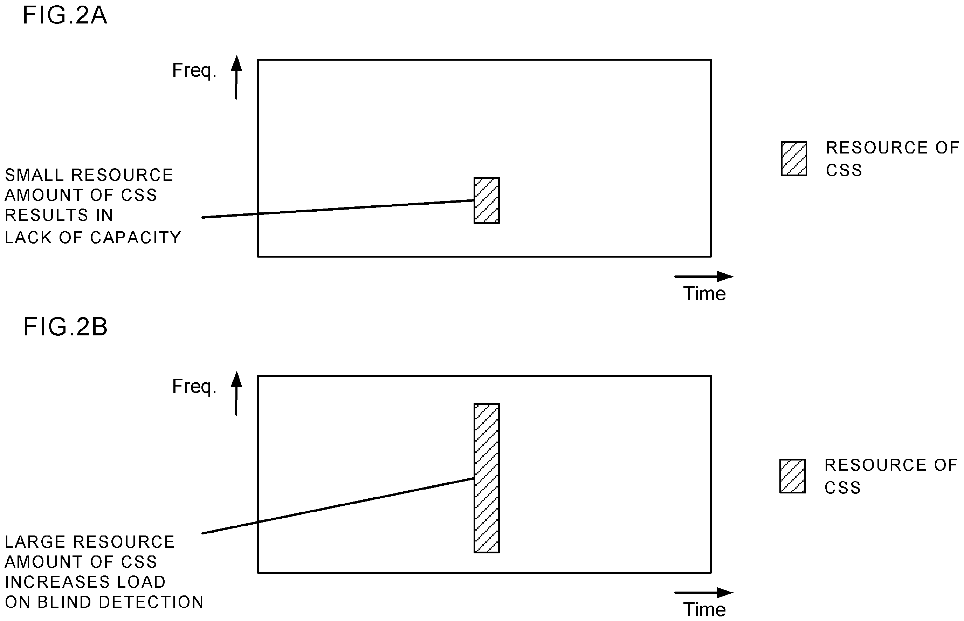

In addition, in existing LTE, the CSS is transmitted and received using beforehand determined certain resources. However, in NR having the possibility of offering various services, when fixed resources are used for the CSS, there is the risk that it is not possible to perform proper communication. Referring to FIG. 2, this problem will be described.

FIG. 2 contains diagrams showing one example of problems caused in association with a resource amount of the CSS. FIG. 2 illustrates CSS resources occupied in predetermined time and frequency resources. The time resource of the CSS may be one or more subframes, one or more symbols and the like. The frequency resource of the CSS may be one or more resource blocks, one or more subbands, one or more subcarriers, and the like.

FIG. 2A shows an example where the resource amount of the CSS is small. In this case, since the information amount capable of being transmitted in the CSS is small, there is the risk that the CSS lacks the capacity. In the example shown in FIG. 2A, since the base station is not able to transmit information to be transmitted in the CSS at some timing, there is the risk of occurrences of decreases in communication throughput, decreases in spectral usage efficiency and the like.

FIG. 2B shows an example where the resource amount of the CSS is large. When the resource amount of the CSS is large, a processing amount of the UE required for blind decoding of the downlink control information is increased. As a result, there is the risk that power consumption of the UE increases.

The inventors of the present invention found that in NR, it is preferable to define flexible CSS in consideration of a traffic amount of the base station and/or UE, numerology and the like. In addition, the numerology is a communication parameter (e.g., at least one of subcarrier spacing (SCS), bandwidth, symbol length, cyclic prefix (CP) length, transmission time interval (TTI) length, the number of symbols per TTI, radio frame configuration, filtering processing, windowing processing, etc.) about the frequency domain and/or time domain.

Therefore, the inventors of the present invention conceived configuring the resource amount of the CSS variably with broadcast information. According to one aspect of the invention, for example, corresponding to a traffic amount, the base station is capable of varying the resource amount of the CSS.

Embodiments according to the present invention will be described below in detail with reference to drawings. A radio communication method according to each Embodiment may be applied alone, or may be applied in combination.

### (Radio communication method)

### <Embodiment 1>

In Embodiment 1 of the present invention, the resource amount of CSS is configured variably using broadcast. Specifically, the time and/or frequency resource amount is made variable for the downlink control channel using the CSS.

Specifically, information (may be also called CSS resource amount information) on the resource amount of the CSS may be included in broadcast information (e.g., MIB and/or SIB) to notify the UE. Based on the notified CSS resource amount information, the UE judges the resource amount of the CSS to monitor. The UE may judge (identify) the CSS resource (PDCCH set, CCE index, etc.), based on the resource amount of the CSS and the resource position of the CSS.

For example, corresponding to a traffic amount (e.g., may be determined using the number of UEs connected to the base station) of the cell, the base station may control an increase or a decrease in the resource amount of the CSS. In consideration of the traffic amount of each UE, channel state, moving speed, position, numerology to apply and the like, the base station may determine the resource amount of the CSS.

The CSS resource amount information may be at least one of the number of RBs, the number of subcarriers, the ratio of frequency resources of the CSS occupied in the system bandwidth and the like. Further, the CSS resource amount information may be information indicative of a difference from the current resource amount of the CSS, or may be information indicative of a change (e.g., "increase", "keep", "decrease") of the resource amount.

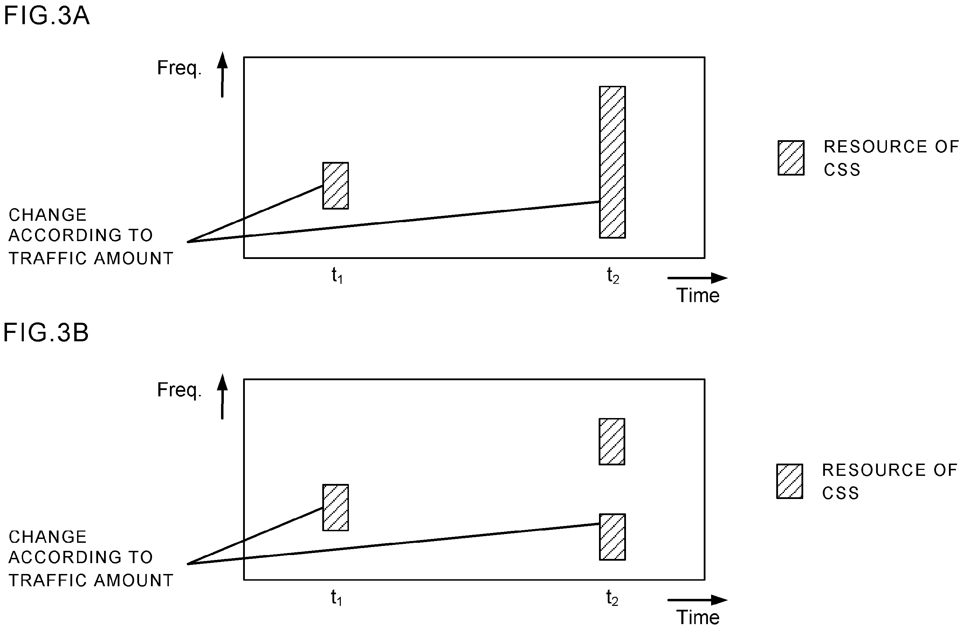

FIG. 3 contains diagrams showing one example of configuration of the resource amount of the CSS according to Embodiment 1. In FIG. 3, it is assumed that the resource amount of the CSS is changed during a period of from time t₁ to t₂, and that the changed resource amount is configured using broadcast, but the configuration method is not limited to this example. FIG. 3A shows one example where the resource amount of the CSS increases. In this example, during a period of from time t₁ to t₂, one contiguous frequency resource is configured for the UE as the resource of the CSS.

The base station may configure a plurality of downlink control channels using the same CSS. A plurality of downlink control channels (e.g., PDCCH set) using the same CSS may be comprised of the same time resource and different frequency resources (may be subjected to Frequency Division Multiplexing: FDM), may be comprised of the same frequency resource and different time resources (may be subjected to Time Division Multiplexing: TDM), or may be comprised of different frequency resources and different time resources (may be subjected to FDM and TDM).

FIG. 3B shows another example of increasing the resource amount of the CSS. In this example, during a period of from time t₁ to t₂, a plurality of (two) discontiguous frequency resources are configured for the UE as the resource of the CSS. In addition, a plurality of resources constituting single CSS may be contiguous resources in the time and/or frequency domain, or may be discontiguous resources. Further, a part or the whole of a plurality of CSS resources may overlap in the time and/or frequency domain. Furthermore, a plurality of resources constituting single CSS may be the same size (e.g., the size of the time resource and the size of the frequency resource are the same), or may different sizes (e.g., one of the resources is an integral multiple of the size of the other resource).

In addition, the same resource mapping method may be applied in a plurality of CSS resources, or different mapping methods may be applied. For example, distributed resource mapping may be configured in one CSS resource to obtain frequency diversity gain, and localized resource mapping capable of obtaining beam forming gain may be configured for the group UE in the other CSS resource.

Further, the same transmission mode may be applied in a plurality of CSS resources, or different transmission modes may be applied. For example, transmission diversity may be configured in one CSS resource, and MIMO transmission for enabling beam forming and/or space division may be configured in the other CSS resource.

Furthermore, the same DCI format may be used in a plurality of CSS resources, or different DCI formats may be used. For example, the format tied to RA-RNTI may be configured so as to transmit only DCI scrambled with the random access identifier (e.g., RA-RNTI) in one CSS resource, and the format tied to SI-RNTI may be configured so as to transmit only DCI scrambled with the system information identifier (e.g., SI-RNTI) in the other CSS resource.

The CSS resource amount information may include information on a plurality of resource amounts. For example, the CSS resource amount information may include information for identifying a plurality of time resources, information for identifying a plurality of frequency resources (e.g., a plurality of pieces of offset information), and the like.

In addition, the default resource amount of the CSS may be defined by specifications, or may be configured for the UE by MIB and/or SIB. The CSS resource amount information may be information indicative of a difference from the default CSS resource amount.

In the case of not receiving the CSS resource amount information on predetermined CSS, based on the default CSS resource amount, the UE may perform reception processing of the CSS. Further, when the CSS resource amount information is notified, instead of the default CSS resource amount, based on the notified CSS resource amount, the UE may perform reception processing of the CSS. Furthermore, after a lapse of a predetermined period since the UE was notified of the CSS resource amount information last, based on the default CSS resource amount, the UE may perform reception processing of the CSS.

According to Embodiment 1 as described above, since it is possible to notify of the resource amount of the CSS using the broadcast information, it is possible to perform proper resource control of the CSS, in consideration of the traffic amount of the UE, variation (change) in numerology and the like. The UE monitors the CSS configured by the broadcast information, and is capable of suitably acquiring downlink control information (e.g., on RAR and messages subsequent to RAR) in the RA procedure, paging and the like.

### <Embodiment 2>

Embodiment 2 of the present invention relates to a method of suppressing increases in the number of blind detections of CSS. In Embodiment 2, the UE limits a region (at least one of timer resource, frequency resource and search space) to monitor. In other words, even in the case where a predetermined CSS resource amount is configured, the UE may monitor a part of the configured all resource.

The monitoring targeted region may be associated with information (time resource, frequency resource, code resource (e.g., orthogonal code, sequence, etc.), format, coverage extension level, the number of repeated transmissions, the presence or absence of hopping, etc.) on resources of the RACH. For example, based on the resource of the RACH (RA preamble), the UE may judge (identify) the resource (PDCCH set, CCE index, etc.) of the CSS. The UE may judge the monitoring targeted region of the CSS, based on the resource of the PRACH, cell identifier (e.g., physical cell ID (identifier), virtual cell ID), UE identifier, other information or combination thereof.

Based on the selected or configured RACH resource, the UE judges the CSS resource targeted for monitoring. Based on the RACH resource in which the PA preamble is received from the UE, the base station determines CSS for DCI transmission, and transmits DCI using the determined CSS resource. The UE performs blind detection on the CSS resource targeted for monitoring, and attempts to acquire the DCI.

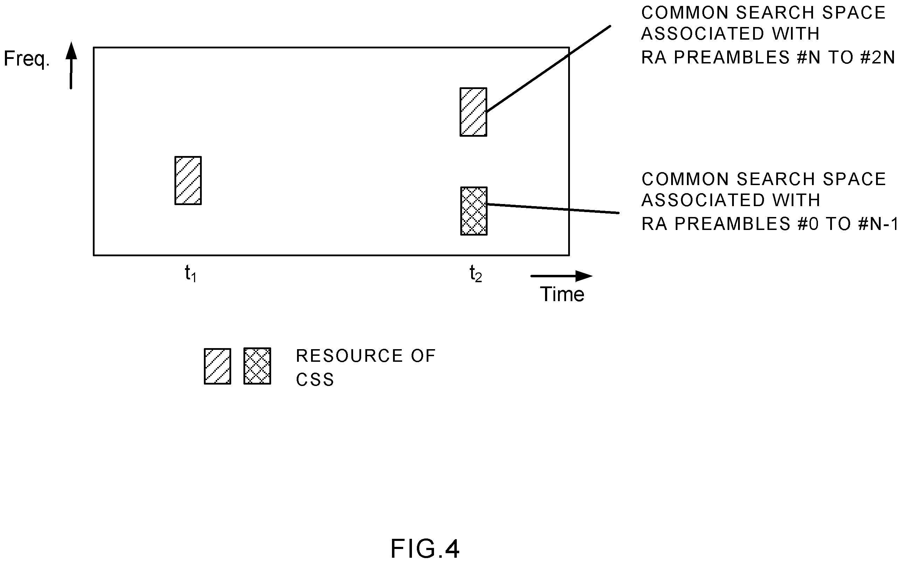

FIG. 4 is a diagram showing one example of configuration of limitation of CSS targeted for monitoring according to Embodiment 2. As in FIG. 3B, FIG. 4 shows the example where a plurality of (two) discontiguous frequency resources are configured for the UE as the resource of the CSS during a period of from time t₁ to t₂.

The CSS resource at time t₂ is sorted into two monitoring targeted regions. One is a CSS resource associated with RA preambles #0 to #N-1 (N is a natural number), and the other one is a CSS resource associated with RA preambles #N to #2N. Based on the sequence of the transmitted RA preamble, the UE monitors one of the regions.

In addition, FIG. 4 shows the example where the CSS is comprised of a plurality of discontiguous frequency resources in the same period, but is not limited thereto. The monitoring targeted region may be a part or the whole of contiguous frequency resources in the same period, or may be a part or the whole of contiguous or discontiguous frequency regions in a plurality of different periods.

Further, the number of (configurable) monitoring targeted regions included inside single CSS is not limited to "2", may be "1", or may be "3" or more. The number of monitoring targeted regions included inside single CSS may be "0". In this case, the UE may perform control for not monitoring the CSS.

According to Embodiment 2 as described above, it is possible to suppress the number of blind decoding times for CSS, and to reduce the processing load on the UE.

### <Modification>

In addition, the configuration of the CSS (configuration, resource amount, association (correspondence relationship) between the RA preamble and the CSS resource, monitoring targeted region, resource mapping method, transmission mode, DCI format to use, identifier used in scrambling of DCI, etc.) may differ with respect to each of the RAR (message 2), retransmission of message 3, message 4, paging, system information and uplink transmit power, or may be common to at least two of the aforementioned matters.

With respect to the RAR (message 2), retransmission of message 3, message 4, paging, system information and uplink transmit power, in the case of using configurations of a plurality of CSS, based on a predetermined CSS resource, the UE may determine another CSS resource. As information on the configuration of the CSS, the UE may be notified of offset information from the predetermined CSS resource by broadcast information and the like. For example, based on the offset information, the UE may determine that the resource of the CSS for message 4 is a resource shifted from the frequency resource of the CSS for retransmission of message 3 by the predetermined number of RBs.

Further, the configuration of the CSS of retransmission of message 3 and subsequent to the retransmission may be designated by the RAR (UL grant of message 3). Furthermore, the CSS subsequent to RRC connection establishment may be configured (notified) by higher layer signaling (e.g., RRC signaling, broadcast information, MAC (Medium Access Control) signaling), physical layer signaling (e.g., DCI), other signals or combination thereof.

Furthermore, the configuration of predetermined CSS may be configured for (notified to) the UE by the broadcast information (MIB, SIB, etc.), may be beforehand defined by specifications, or may be configured for (notified to) the UE based on information transmitted in another CSS. For example, based on the downlink control information transmitted in the CSS for RAR, the UE may determine the configuration of the CSS for retransmission of message 3.

The downlink control channels included inside the same CSS may be transmitted using the same beam for all of the channels (the same BF may be applied), or may be transmitted using a plurality of different beams. For example, the CSS resource (downlink control channel) may be transmitted using a different beam for each monitoring targeted region described in Embodiment 2. Further, different CSS resources may be transmitted using the same or different beams.

### (Radio communication system)

A configuration of a radio communication system according to one Embodiment of the present invention will be described below. In the radio communication system, communication is performed by using any of the radio communication methods according to above-mentioned each Embodiment of the invention or combination thereof.

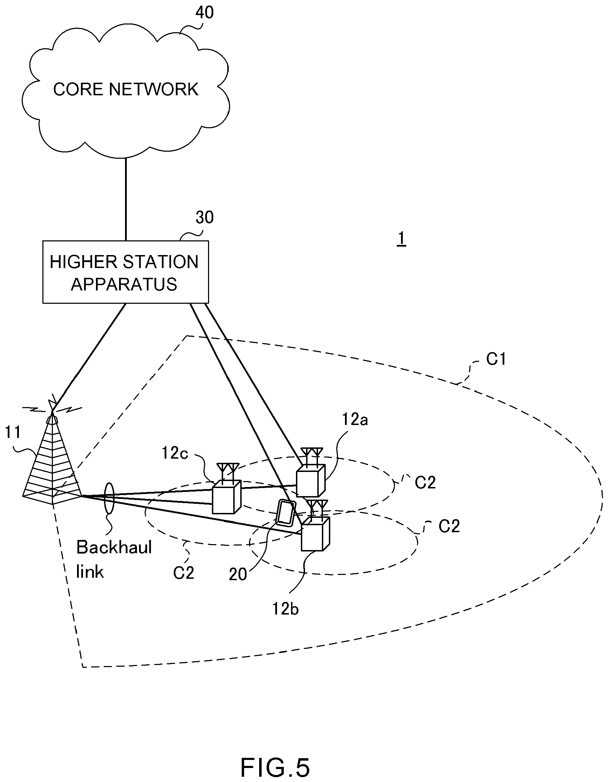

FIG. 5 is a diagram showing one example of a schematic configuration of the radio communication system according to one Embodiment of the present invention. In the radio communication system 1, it is possible to apply carrier aggregation (CA) to aggregate a plurality of base frequency blocks (component carriers) with a system bandwidth (e.g., 20 MHz) of the LTE system as one unit and/or dual connectivity (DC).

In addition, the radio communication system 1 may be called LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA (Future Radio Access), New-RAT (Radio Access Technology), and the like, or may be called the system to actualize each system described above.

The radio communication system 1 is provided with a radio base station 11 for forming a macrocell C1 with relatively wide coverage, and radio base stations 12 (12a to 12c) disposed inside the macrocell C1 to form small cells C2 narrower than the macrocell C1. Further, a user terminal 20 is disposed in the macrocell C1 and each of the small cells C2. The arrangement, the number and the like of each cell and user terminal 20 are not limited to those shown in the figure.

The user terminal 20 is capable of connecting to both the radio base station 11 and the radio base station 12. The user terminal 20 is assumed to concurrently use the macrocell C1 and small cell C2 using CA or DC. Further, the user terminal 20 may apply CA or DC using a plurality of cells (CCs) (e.g., 5 CCs or less, 6 CCs or more).

The user terminal 20 and radio base station 11 are capable of communicating with each other using carriers (also called the existing carrier, legacy carrier and the like) with a narrow bandwidth in a relatively low frequency band (e.g., 2 GHz). On the other hand, the user terminal 20 and radio base station 12 may use carriers with a wide bandwidth in a relatively high frequency band (e.g., 3.5 GHz, 5 GHz, etc.), or may use the same carrier as in the radio base station 11. In addition, the configuration of the frequency band used in each radio base station is not limited thereto.

It is possible to configure so that the radio base station 11 and radio base station 12 (or, two radio base stations 12) undergo wired connection (e.g., optical fiber in conformity with CPRI (Common Public Radio Interface), X2 interface, etc.), or wireless connection.

The radio base station 11 and each of the radio base stations 12 are respectively connected to a higher station apparatus 30, and are connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be called a macro base station, collection node, eNB (eNodeB), transmission and reception point and the like. Further, the radio base station 12 is a radio base station having local coverage, and may be called a small base station, micro-base station, pico-base station, femto-base station, HeNB (Home eNodeB), RRH (Remote Radio Head), transmission and reception point and the like. Hereinafter, in the case of not distinguishing between the radio base stations 11 and 12, the stations are collectively called a radio base station 10.

Each user terminal 20 is a terminal supporting various communication schemes such as LTE and LTE-A, and may include a fixed communication terminal (fixed station), as well as the mobile communication terminal (mobile station).

In the radio communication system 1, as radio access schemes, Orthogonal Frequency Division Multiple Access (OFDMA) is applied on downlink, and Single Carrier Frequency Division Multiple Access (SC-FDMA) is applied on uplink.

OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of one or contiguous resource blocks for each terminal so that a plurality of terminals uses mutually different bands, and thereby reducing interference among terminals. In addition, uplink and downlink radio access schemes are not limited to the combination of the schemes, and another radio access scheme may be used.

As downlink channels, in the radio communication system 1 are used a downlink shared channel (PDSCH: Physical Downlink Shared Channel) shared by user terminals 20, broadcast channel (PBCH: Physical Broadcast Channel), downlink L1/L2 control channels and the like. User data, higher layer control information, SIB (System Information Block) and the like are transmitted on the PDSCH. Further, MIB (Master Information Block) is transmitted on the PBCH.

The downlink L1/L2 control channel includes PDCCH (Physical Downlink Control Channel), EPDCCH (Enhanced Physical Downlink Control Channel), PCFICH (Physical Control Format Indicator Channel), PHICH (Physical Hybrid-ARQ Indicator Channel) and the like. The downlink control information (DCI) including scheduling information of the PDSCH and PUSCH and the like is transmitted on the PDCCH. The number of OFDM symbols used in the PDCCH is transmitted on the PCFICH. Receipt confirmation information (e.g., also referred to as retransmission control information, HARQ-ACK, ACK/NACK, etc.) of HARQ (Hybrid Automatic Repeat reQuest) for the PUSCH is transmitted on the PHICH. The EPDCCH is frequency division multiplexed with the PDSCH (downlink shared data channel) to be used in transmitting the DCI and the like as the PDCCH.

As uplink channels, in the radio communication system 1 are used an uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data, higher layer control information and the like is transmitted on the PUSCH. Further, radio quality information (CQI: Channel Quality Indicator) of downlink, receipt confirmation information and the like are transmitted on the PUCCH. A random access preamble to establish connection with the cell is transmitted on the PRACH.

As downlink reference signals, in the radio communication system 1 are transmitted Cell-specific Reference Signal (CRS), Channel State Information-Reference Signal (CSI-RS), Demodulation Reference Signal (DMRS: DeModulation Reference Signal), Positioning Reference Signal (PRS) and the like. Further, as uplink reference signals, in the radio communication system 1 are transmitted Sounding Reference Signal (SRS), Demodulation Reference Signal (DMRS) and the like. In addition, the DMRS may be called UE-specific Reference Signal. Further, the transmitted reference signals are not limited thereto.

### (Radio base station)

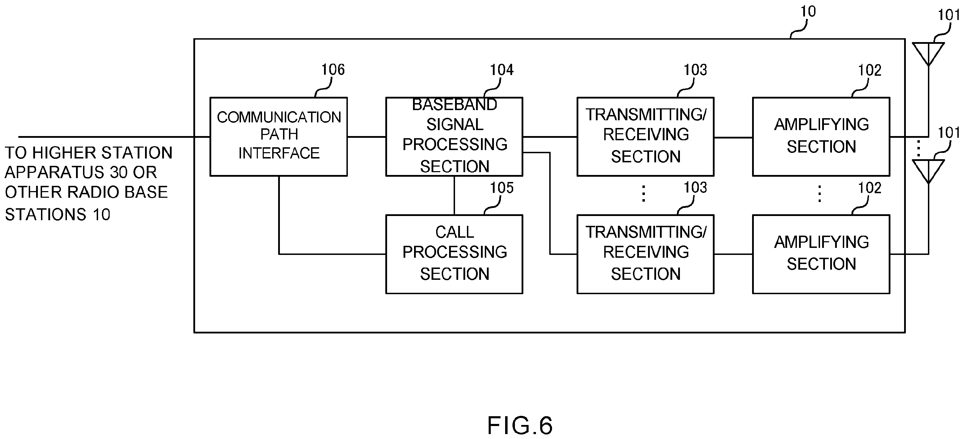

FIG. 6 is a diagram showing one example of an entire configuration of the radio base station according to one Embodiment of the present invention. The radio base station 10 is provided with a plurality of transmitting/receiving antennas 101, amplifying sections 102, transmitting/receiving sections 103, baseband signal processing section 104, call processing section 105, and communication path interface 106. In addition, with respect to each of the transmitting/receiving antenna 101, amplifying section 102, and transmitting/receiving section 103, the radio base station may be configured to include at least one or more.

User data to transmit to the user terminal 20 from the radio base station 10 on downlink is input to the baseband signal processing section 104 from the higher station apparatus 30 via the communication path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g., transmission processing of HARQ), scheduling, transmission format selection, channel coding, Inverse Fast Fourier Transform (IFFT) processing, and precoding processing to transfer to the transmitting/receiving sections 103. Further, also concerning a downlink control signal, the section 104 performs transmission processing such as channel coding and Inverse Fast Fourier Transform on the signal to transfer to the transmitting/receiving sections 103.

Each of the transmitting/receiving sections 103 converts the baseband signal, which is subjected to precoding for each antenna and is output from the baseband signal processing section 104, into a signal with a radio frequency band to transmit. The radio-frequency signal subjected to frequency conversion in the transmitting/receiving section 103 is amplified in the amplifying section 102, and is transmitted from the transmitting/receiving antenna 101. The transmitting/receiving section 103 is capable of being comprised of a transmitter/receiver, transmitting/receiving circuit or transmitting/receiving apparatus explained based on common recognition in the technical field according to the present invention. In addition, the transmitting/receiving section 103 may be comprised as an integrated transmitting/receiving section, or may be comprised of a transmitting section and receiving section.

On the other hand, for uplink signals, radio-frequency signals received in the transmitting/receiving antennas 101 are amplified in the amplifying sections 102. The transmitting/receiving section 103 receives the uplink signal amplified in the amplifying section 102. The transmitting/receiving section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the communication path interface 106. The call processing section 105 performs call processing (configuration, release and the like) of a communication channel, state management of the radio base station 10, management of radio resources and the like.

The communication path interface 106 transmits and receives signals to/from the higher station apparatus 30 via a predetermined interface. Further, the communication path interface 106 may transmit and receive signals (backhaul signaling) to/from another radio base station 10 via an inter-base station interface (e.g., optical fiber in conformity with CPRI (Common Public Radio Interface), X2 interface).

In addition, the transmitting/receiving section 103 may further have an analog beam forming section for performing analog beam forming. The analog beam forming section may be comprised of an analog beam forming circuit (e.g., phase shifter, phase shift circuit) or analog beam forming apparatus (e.g., phase shift device) explained based on common recognition in the technical field according to the present invention. Further, for example, the transmitting/receiving antenna 101 may be comprised of an array antenna.

The transmitting/receiving section 103 transmits the downlink control information (DCI) on the downlink control channel (PDCCH, etc.) in at least a part of a predetermined CSS resource determined by a control section 301. Further, the transmitting/receiving section 103 may transmit at least one of broadcast information including information (CSS resource amount information) on the resource amount of common search space (CSS) and random access response.

The transmitting/receiving section 103 may transmit, to the user terminal 20, information on the configuration of the CSS (configuration of the CSS, resource position of the CSS, resource amount of the CSS, association (correspondence relationship) between the RA preamble and the CSS resource, monitoring targeted region, offset information, etc.). Further, the transmitting/receiving section 103 may receive the RA preamble.

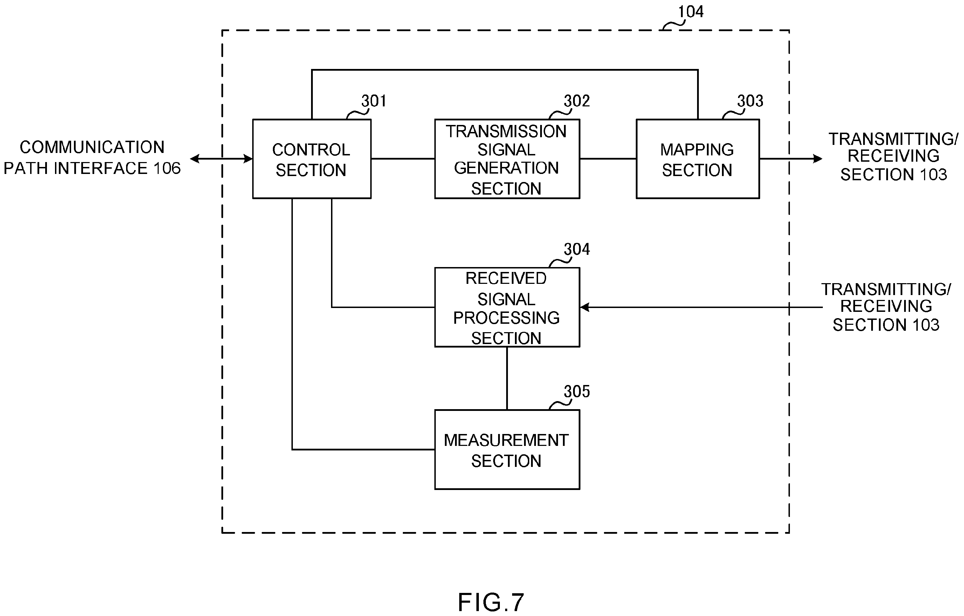

FIG. 7 is a diagram showing one example of a function configuration of the radio base station according to one Embodiment of the present invention. In addition, this example mainly illustrates function blocks of a characteristic portion in this Embodiment, and the radio base station 10 is assumed to have other function blocks required for radio communication.

The baseband signal processing section 104 is provided with at least a control section (scheduler) 301, transmission signal generating section 302, mapping section 303, received signal processing section 304, and measurement section 305. In addition, these components are essentially included in the radio base station 10, and a part or the whole of the components may not be included in the baseband signal processing section 104.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, allocation of signals by the mapping section 303 and the like. Further, the control section 301 controls reception processing of signals by the received signal processing section 304, measurement of signals by the measurement section 305 and the like.

The control section 301 controls scheduling (e.g., resource allocation) of system information, downlink data signal transmitted on the PDSCH, and downlink control signal transmitted on the PDCCH and/or EPDCCH. Further, based on a result obtained by determining the necessity of retransmission control to an uplink data signal, and the like, the control section 301 controls generation of the downlink control signal (e.g., receipt confirmation signal, etc.), downlink data signal and the like. Furthermore, the control section 301 performs control of scheduling of synchronization signals (e.g., PSS (Primary Synchronization Signal)/SSS (Secondary Synchronization Signal)), downlink reference signals (e.g., CRS, CSI-RS, DMRS) and the like.

Further, the control section 301 controls scheduling of the uplink data signal transmitted on the PUSCH, uplink control signal (e.g., receipt confirmation information) transmitted on the PUCCH and/or PUSCH, random access preamble transmitted on the PRACH, uplink reference signal and the like.

In consideration of at least one of a traffic amount on the cell and/ the UE, channel state, moving speed, position, numerology to apply and the like, the control section 301 may determine the resource amount of the CSS, the resource position, the number of resources and the like. With respect to single CSS, the control section 301 may perform FDM and/or TDM on a plurality of downlink control channels (e.g., PDCCH set) to configure. The control section 301 may control to transmit the CSS resource information indicative of the determined CSS resource amount.

Upon receiving an RA preamble from the received signal processing section 304, based on the information (e.g., RACH resource) used in transmission of the RA preamble, the control section 301 may determine the resource to map (transmit) downlink control information inside predetermined CSS.

For a period during which a predetermined user terminal 20 performs the RA procedure, the control section 301 may perform control for notifying the user terminal of a plurality of pieces of CSS resource amount information. For example, the control section 301 transmits first CSS resource amount information for the user terminal 20 to determine the resource of first CSS (e.g., CSS of message 2), and may transmit second CSS resource amount information for the user terminal 20 to determine the resource of second CSS (e.g., CSS of message 4).

The control section 301 controls to form a transmission beam and/or a reception beam, using digital BF (e.g., precoding) by the baseband signal processing section 104 and/or analog BF (e.g., phase rotation) by the transmitting/receiving section 103. Based on the downlink propagation path information, uplink propagation path information and the like, the control section 301 may control to form the beam. These pieces of propagation path information may be acquired from the received signal processing section 304 and/or the measurement section 305.

Based on instructions from the control section 301, the transmission signal generating section 302 generates downlink signals (downlink control signal, downlink data signal, downlink reference signal, etc.) to output to the mapping section 303. The transmission signal generating section 302 is capable of being comprised of a signal generator, signal generating circuit or signal generating apparatus explained based on the common recognition in the technical field according to the present invention.

For example, based on instructions from the control section 301, the transmission signal generating section 302 generates DL assignment to notify of assignment information of downlink signals and UL grant to notify of assignment information of uplink signals. Further, the downlink data signal is subjected to coding processing and modulation processing, according to a coding rate, modulation scheme and the like determined based on the channel state information (CSI) from each user terminal 20 and the like.

Based on instructions from the control section 301, the mapping section 303 maps the downlink signal generated in the transmission signal generating section 302 to predetermined radio resources to output to the transmitting/receiving section 103. The mapping section 303 is capable of being comprised of a mapper, mapping circuit or mapping apparatus explained based on the common recognition in the technical field according to the present invention.

The received signal processing section 304 performs reception processing (e.g., demapping, demodulation, decoding, etc.) on the received signal input from the transmitting/receiving section 103. Herein, for example, the received signal is the uplink signal (uplink control signal, uplink data signal, uplink reference signal, etc.) transmitted from the user terminal 20. The received signal processing section 304 is capable of being comprised of a signal processor, signal processing circuit or signal processing apparatus explained based on the common recognition in the technical field according to the present invention.

The received signal processing section 304 outputs the information decoded by the reception processing to the control section 301. For example, in the case of receiving the PUCCH including HARQ-ACK, the section 304 outputs the HARQ-ACK to the control section 301. Further, the received signal processing section 304 outputs the received signal and/or signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, the measurement section 305 may measure received power (e.g., RSRP (Reference Signal Received Power)), received quality (e.g., RSRQ (Reference Signal Received Quality), SINR (Signal to Interference plus Noise Ratio)), downlink propagation path information (e.g., CSI), uplink propagation path information, round-trip propagation path information and the like of the received signal. The measurement result may be output to the control section 301.

### (User terminal)

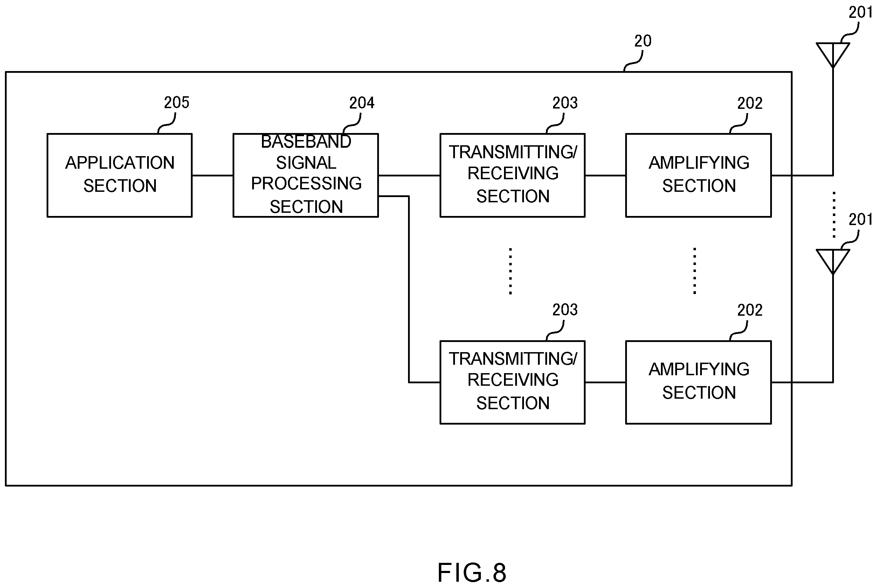

FIG. 8 is a diagram showing one example of an entire configuration of the user terminal according to one Embodiment of the present invention. The user terminal 20 is provided with a plurality of transmitting/receiving antennas 201, amplifying sections 202, transmitting/receiving sections 203, baseband signal processing section 204, and application section 205. In addition, with respect to each of the transmitting/receiving antenna 201, amplifying section 202, and transmitting/receiving section 203, the user terminal may be configured to include at least one or more.

Radio-frequency signals received in the transmitting/receiving antennas 201 are respectively amplified in the amplifying sections 202. Each of the transmitting/receiving sections 203 receives the downlink signal amplified in the amplifying section 202. The transmitting/receiving section 203 performs frequency conversion on the received signal into a baseband signal to output to the baseband signal processing section 204. The transmitting/receiving section 203 is capable of being comprised of a transmitter/receiver, transmitting/receiving circuit or transmitting/receiving apparatus explained based on the common recognition in the technical field according to the present invention. In addition, the transmitting/receiving section 203 may be comprised as an integrated transmitting/receiving section, or may be comprised of a transmitting section and receiving section.

The baseband signal processing section 204 performs FFT processing, error correcting decoding, reception processing of retransmission control and the like on the input baseband signal. User data on downlink is transferred to the application section 205. The application section 205 performs processing concerning layers higher than the physical layer and MAC layer, and the like. Further, among the downlink data, broadcast information may also be transferred to the application section 205.

On the other hand, for user data on uplink, the data is input to the baseband signal processing section 204 from the application section 205. The baseband signal processing section 204 performs transmission processing of retransmission control (e.g., transmission processing of HARQ), channel coding, precoding, Discrete Fourier Transform (DFT) processing, IFFT processing and the like to transfer to each of the transmitting/receiving sections 203. Each of the transmitting/receiving sections 203 converts the baseband signal output from the baseband signal processing section 204 into a signal with a radio frequency band to transmit. The radio-frequency signals subjected to frequency conversion in the transmitting/receiving sections 203 are amplified in the amplifying sections 202, and are transmitted from the transmitting/receiving antennas 201, respectively.

In addition, the transmitting/receiving section 203 may further have an analog beam forming section for performing analog beam forming. The analog beam forming section may be comprised of an analog beam forming circuit (e.g., phase shifter, phase shift circuit) or analog beam forming apparatus (e.g., phase shift device) explained based on the common recognition in the technical field according to the present invention. Further, for example, the transmitting/receiving antenna 201 may be comprised of an array antenna.

The transmitting/receiving section 203 monitors the downlink control channel (PDCCH, etc.) in at least a part of a predetermined CSS resource determined by a control section 401. Further, the transmitting/receiving section 203 may receive at least one of broadcast information (MIB, SIB, etc.) including the CSS resource amount information and random access response.

The transmitting/receiving section 203 may receive, from the radio base station 10, the information on the configuration of the CSS (configuration of the CSS, resource position of the CSS, resource amount of the CSS, association (correspondence relationship) between the RA preamble and the CSS resource, monitoring targeted region, offset information, etc.). Further, the transmitting/receiving section 203 may transmit the RA preamble.

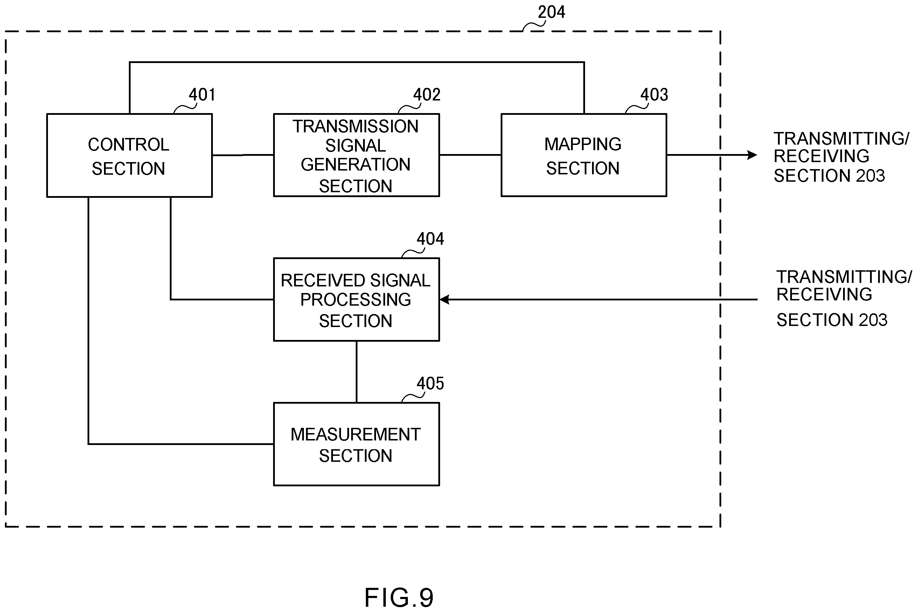

FIG. 9 is a diagram showing one example of a function configuration of the user terminal according to one Embodiment of the present invention. In addition, this example mainly illustrates function blocks of a characteristic portion in this Embodiment, and the user terminal 20 is assumed to have other function blocks required for radio communication.

The baseband signal processing section 204 that the user terminal 20 has is provided with at least a control section 401, transmission signal generating section 402, mapping section 403, received signal processing section 404, and measurement section 405. In addition, these components are essentially included in the user terminal 20, and a part or the whole of the components may not be included in the baseband signal processing section 204.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, allocation of signals by the mapping section 403 and the like. Further, the control section 401 controls reception processing of signals by the received signal processing section 404, measurement of signals by the measurement section 405 and the like.

The control section 401 acquires the downlink control signal (signal transmitted on the PDCCH/EPDCCH) and downlink data signal (signal transmitted on the PDSCH) transmitted from the radio base station 10, from the received signal processing section 404. Based on the downlink control signal and/or a result obtained by determining the necessity of retransmission control to the downlink data signal, and the like, the control section 401 controls generation of the uplink control signal (e.g., receipt confirmation information, etc.) and/or uplink data signal.

Based on the information (CSS resource amount information) on the resource amount of the common search space (CSS), the control section 401 determines the resource of predetermined CSS. The CSS resource information may be acquired from the received signal processing section 404.

Based on the CSS resource amount information, the control section 401 may determine that the resource of predetermined CSS is comprised of a contiguous resource or a plurality of discontiguous resources.

Based on the information (may be also called PRACH resource information, RA preamble information and the like) on the resource of RACH, the control section 401 may control transmission of an RA preamble. Further, based on the information (e.g., information on the RACH resource) used in transmission of the RA preamble, the control section 401 may determine the resource of predetermined CSS (targeted for monitoring) to monitor

During the RA procedure, based on a plurality of pieces of CSS resource amount information, the control section 401 may determine respective resources of different CSS. For example, based on the first CSS resource amount information, the control section 401 may determine the resource of first CSS (e.g., CSS for message 2), and based on the second CSS resource amount information, may determine the resource of second CSS (e.g., CSS for message 4).

The control section 401 controls to form a transmission beam and/or a reception beam, using digital BF (e.g., precoding) by the baseband signal processing section 204 and/or analog BF (e.g., phase rotation) by the transmitting/receiving section 203. Based on the downlink propagation path information, uplink propagation path information and the like, the control section 401 may control to form the beam. These pieces of propagation path information may be acquired from the received signal processing section 404 and/or the measurement section 405.

Further, in the case of acquiring various pieces of information notified from the radio base station 10, from the received signal processing section 404, based on the information, the control section 401 may update a parameter used in control.

Based on instructions from the control section 401, the transmission signal generating section 402 generates uplink signals (uplink control signal, uplink data signal, uplink reference signal, etc.) to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal about receipt confirmation information, channel state information (CSI) and the like. Further, based on instructions from the control section 401, the transmission signal generating section 402 generates the uplink data signal. For example, when the downlink control signal notified from the radio base station 10 includes the UL grant, the transmission signal generating section 402 is instructed to generate the uplink data signal from the control section 401.

Based on instructions from the control section 401, the mapping section 403 maps the uplink signal generated in the transmission signal generating section 402 to radio resources to output to the transmitting/receiving section 203. The mapping section 403 is capable of being comprised of a mapper, mapping circuit or mapping apparatus explained based on the common recognition in the technical field according to the present invention.

The received signal processing section 404 performs reception processing (e.g. demapping, demodulation, decoding, etc.) on the received signal input from the transmitting/receiving section 203. Herein, for example, the received signal is the downlink signal (downlink control signal, downlink data signal, downlink reference signal, etc.) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the receiving section according to the present invention.

The received signal processing section 404 outputs the information decoded by the reception processing to the control section 401. For example, the received signal processing section 404 outputs the broadcast information, system information, RRC signaling, DCI and the like to the control section 401. Further, the received signal processing section 404 outputs the received signal and/or signal subjected to the reception processing to the measurement section 405.

The measurement section 405 performs measurement on the received signal. For example, the measurement section 405 performs measurement using the downlink reference signal transmitted from the radio base station 10. The measurement section 405 is capable of being comprised of a measurement device, measurement circuit or measurement apparatus explained based on the common recognition in the technical field according to the present invention.

For example, the measurement section 405 may measure received power (e.g., RSRP), received quality (e.g., RSRQ, received SINR), downlink propagation path information (e.g., CSI), uplink propagation path information, round-trip propagation path information and the like of the received signal. The measurement result may be output to the control section 401.

### (Hardware configuration)

In addition, the block diagrams used in explanation of the above-mentioned Embodiments show blocks on a function-by-function basis. These function blocks (configuration sections) are actualized by any combination of hardware and/or software. Further, the means for actualizing each function block is not limited particularly. In other words, each function block may be actualized by a single apparatus combined physically and/or logically, or two or more apparatuses that are separated physically and/or logically are connected directly and/or indirectly (e.g., by cable and/or radio), and each function block may be actualized by a plurality of these apparatuses.

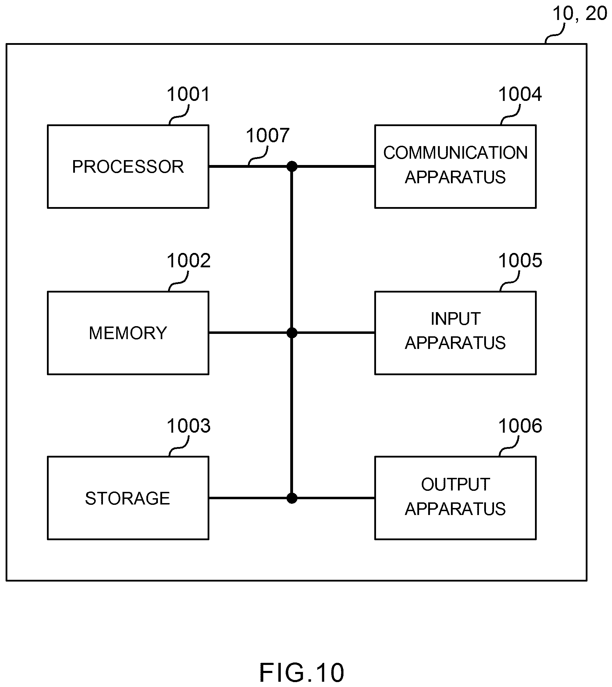

For example, each of the radio base station, user terminal and the like in one Embodiment of the present invention may function as a computer that performs the processing of the radio communication method of the invention. FIG. 10 is a diagram showing one example of a hardware configuration of each of the radio base station and user terminal according to one Embodiment of the invention. Each of the radio base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the following description, it is possible to replace the letter of "apparatus" with a circuit, device, unit and the like to read. With respect to each apparatus shown in the figure, the hardware configuration of each of the radio base station 10 and the user terminal 20 may be configured so as to include one or a plurality of apparatuses, or may be configured without including a part of apparatuses.

For example, a single processor 1001 is shown in the figure, but a plurality of processors may exist. Further, the processing may be executed by a single processor, or may be executed by one or more processors at the same time, sequentially or by another technique. In addition, the processor 1001 may be implemented on one or more chips.

For example, each function in the radio base station 10 and user terminal 20 is actualized in a manner such that predetermined software (program) is read on the hardware of the processor 1001, memory 1002 and the like, and that the processor 1001 thereby performs computations, and controls communication by the communication apparatus 1004, and read and/or write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, the above-mentioned baseband signal processing section 104 (204), call processing section 105 and the like may be actualized by the processor 1001.

Further, the processor 1001 reads the program (program code), software module, data and the like on the memory 1002 from the storage 1003 and/or the communication apparatus 1004, and according thereto, executes various kinds of processing. Used as the program is a program that causes the computer to execute at least a part of operation described in the above-mentioned Embodiments. For example, the control section 401 of the user terminal 20 may be actualized by a control program stored in the memory 1002 to operate in the processor 1001, and the other function blocks may be actualized similarly.

The memory 1002 is a computer-readable storage medium, and for example, may be comprised of at least one of ROM (Read Only Memory), EPROM (Erasable Programmable ROM), EEPROM (Electrically EPROM), RAM (Random Access Memory) and other proper storage media. The memory 1002 may be called the register, cache, main memory (main storage apparatus) and the like. The memory 1002 is capable of storing the program (program code), software module and the like executable to implement the radio communication method according to one Embodiment of the present invention.

The storage 1003 is a computer-readable storage medium, and for example, may be comprised of at least one of a flexible disk, floppy (Registered Trademark) disk, magneto-optical disk (e.g., compact disk (CD-ROM (Compact Disc ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via a wired and/or wireless network, and for example, is also referred to as a network device, network controller, network card, communication module and the like. For example, in order to actualize Frequency Division Duplex (FDD) and/or Time Division Duplex (TDD), the communication apparatus 1004 may be comprised by including a high-frequency switch, duplexer, filter, frequency synthesizer and the like. For example, the transmitting/receiving antenna 101 (201), amplifying section 102 (202), transmitting/receiving section 103 (203), communication path interface 106 and the like as described above may be actualized by the communication apparatus 1004.

The input apparatus 1005 is an input device (e.g., keyboard, mouse, microphone, switch, button, sensor, etc.) that receives input from the outside. The output apparatus 1006 is an output device (e.g., display, speaker, LED (Light Emitting Diode) lamp, etc.) that performs output to the outside. In addition, the input apparatus 1005 and output apparatus 1006 may be an integrated configuration (e.g., touch panel).

Further, each apparatus of the processor 1001, memory 1002 and the like is connected on the bus 1007 to communicate information. The bus 1007 may be comprised of a single bus, or may be comprised of different buses between apparatuses.

Furthermore, each of the radio base station 10 and user terminal 20 may be configured by including hardware such as a microprocessor, Digital Signal Processor (DSP), ASIC (Application Specific Integrated Circuit), PLD (Programmable Logic Device), and FPGA (Field Programmable Gate Array), or a part or the whole of each function block may be actualized by the hardware. For example, the processor 1001 may be implemented by at least one of the hardware.

### (Modification)

In addition, the term explained in the present Description and/or the term required to understand the present Description may be replaced with a term having the same or similar meaning. For example, the channel and/or the symbol may be a signal (signaling). Further, the signal may be a message. The reference signal is capable of being abbreviated as RS (Reference Signal), and according to the standard to apply, may be called a pilot, pilot signal and the like. Furthermore, a component carrier (CC) may be called a cell, frequency carrier, carrier frequency and the like.

Further, the radio frame may be comprised of one or a plurality of frames in the time domain. The one or each of the plurality of frames constituting the radio frame may be called a subframe. Furthermore, the subframe may be comprised of one or a plurality of slots in the time domain. Still furthermore, the slot may be comprised of one or a plurality of symbols (OFDM (Orthogonal Frequency Division Multiplexing) symbols, SC-FDMA (Single Carrier Frequency Division Multiple Access) symbols and the like) in the time domain.

Each of the radio frame, subframe, slot and symbol represents a time unit in transmitting a signal. For the radio frame, subframe, slot and symbol, another name corresponding to each of them may be used. For example, one subframe may be called Transmission Time Interval (TTI), a plurality of contiguous subframes may be called TTI, or one slot or one mini-slot may be called TTI. In other words, the subframe and/or TTI may be the subframe (1 ms) in existing LTE, may be a frame (e.g., 1 to 13 symbols) shorter than 1 ms, or may be a frame longer than 1 ms. In addition, instead of the subframe, the unit representing the TTI may be called the slot, mini-slot and the like.

Herein, for example, the TTI refers to a minimum time unit of scheduling in radio communication. For example, in the LTE system, the radio base station performs scheduling for allocating radio resources (frequency bandwidth, transmit power and the like capable of being used in each user terminal) to each user terminal in a TTI unit. In addition, the definition of the TTI is not limited thereto. The TTI may be a transmission time unit of a data packet (transport block) subjected to channel, or may be a processing unit of scheduling, link adaptation and the like.

The TTI having a time length of 1 ms may be called ordinary TTI (TTI in LTE Rel.8-12), normal TTI, long TTI, ordinary subframe, normal subframe, long subframe or the like. The TTI shorter than the ordinary TTI may be called shortened TTI, short TTI, shortened subframe, short subframe or the like.

In addition, the long TTI (e.g., ordinary TTI, subframe, etc.) may be read with TTI having a time length exceeding 1 ms, and the short TTI (e.g., shortened TTI, etc.) may be read with TTI having a TTI length of 1 ms or more and less than the TTI length of the long TTI.

The resource block (RB) is a resource allocation unit in the time domain and frequency domain, and may include one or a plurality of contiguous subcarriers in the frequency domain. Further, the RB may include one or a plurality of symbols in the time domain, and may be a length of 1 slot, 1 subframe, or 1 TTI. Each of 1 TTI and 1 subframe may be comprised of one or a plurality of resource blocks. In addition, the RB may be called a physical resource block (PRB: Physical RB), PRB pair, RB pair and the like.

Further, the resource block may be comprised of one or a plurality of resource elements (RE: Resource Element). For example, 1 RE may be a radio resource region of 1 subcarrier and 1 symbol.

In addition, structures of the above-mentioned radio frame, subframe, slot, symbol and the like are only illustrative. For example, it is possible to modify, in various manners, configurations of the number of subframes included in the radio frame, the number of slots included in the subframe, the numbers of symbols and RBs included in the slot, the number of subcarriers included in the RB, the number of symbols within the TTI, the symbol length, the cyclic prefix (CP) length and the like.

Further, the information, parameter and the like explained in the present Description may be expressed using an absolute value, may be expressed using a relative value from a predetermined value, or may be expressed using another corresponding information. For example, the radio resource may be indicated by a predetermined index. Furthermore, equations using these parameters and the like may be different from those explicitly disclosed in the present Description.

The names used in the parameter and the like in the present Description are not restrictive names in any respects. For example, it is possible to identify various channels (PUCCH (Physical Uplink Control Channel), PDCCH (Physical Downlink Control Channel) and the like) and information elements, by any suitable names, and therefore, various names assigned to these various channels and information elements are not restrictive names in any respects.

The information, signal and the like explained in the present Description may be represented by using any of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Further, the information, signal and the like are capable of being output from a higher layer to a lower layer, and/or from the lower layer to the higher layer. The information, signal and the like may be input and output via a plurality of network nodes.

The input/output information, signal and the like may be stored in a particular place (e.g., memory), or may be managed using a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiments described in the present Description, and may be performed using another method. For example, notification of the information may be performed using physical layer signaling (e.g., Downlink Control Information (DCI), Uplink Control Information (UCI)), higher layer signaling (e.g., RRC (Radio Resource Control) signaling, broadcast information (Master Information Block (MIB), System Information Block (SIB) and the like), MAC (Medium Access Control) signaling), other signals, or combination thereof.

In addition, the physical layer signaling may be called L1/L2 (Layer 1/Layer 2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of predetermined information (e.g., notification of "being X") is not limited to notification that is performed explicitly, and may be performed implicitly (e.g., notification of the predetermined information is not performed, or by notification of different information).

The decision may be made with a value ("0" or "1") expressed by 1 bit, may be made with a Boolean value represented by true or false, or may be made by comparison with a numerical value (e.g., comparison with a predetermined value).

Irrespective of that the software is called software, firmware, middle-ware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using wired techniques (coaxial cable, optical fiber cable, twisted pair, Digital Subscriber Line (DSL) and the like) and/or wireless techniques (infrared, microwave and the like), these wired techniques and/or wireless techniques are included in the definition of the transmission medium.

The terms of "system" and "network" used in the present Description are used interchangeably.

In the present Description, the terms of "Base Station (BS)", "radio base station", "eNB", "gNB", "cell", "sector", "cell group", "carrier" and "component carrier" are capable of being used interchangeably. There is the case where the base station is called by the terms of fixed station, NodeB, eNodeB (eNB), access point, transmission point, reception point, femto-cell, small cell and the like.

The base station is capable of accommodating one or a plurality of (e.g., three) cells (also called the sector). When the base station accommodates a plurality of cells, the entire coverage area of the base station is capable of being divided into a plurality of smaller areas, and each of the smaller areas is also capable of providing communication services by a base station sub-system (e.g., small base station (RRH: Remote Radio Head) for indoor use). The term of "cell" or "sector" refers to a part or the whole of coverage area of the base station and/or base station sub-system that performs communication services in the coverage.

In the present Description, the terms of "Mobile Station (MS)", "user terminal", "User Equipment (UE)", and "terminal" are capable of being used interchangeably. There is the case where the base station is called by the terms of fixed station, NodeB, eNodeB (eNB), access point, transmission point, reception point, femto-cell, small cell and the like.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms, by a person skilled in the art.

Further, the radio base station in the present Description may be read with the user terminal. For example, each Aspect/Embodiment of the present invention may be applied to a configuration where communication between the radio base station and the user terminal is replaced with communication among a plurality of user terminals (D2D: Device-to-Device). In this case, the functions that the above-mentioned radio base station 10 has may be the configuration that the user terminal 20 has. Further, the words of "up", "down" and the like may be read with "side". For example, the uplink channel may be read with a side channel.

Similarly, the user terminal in the present Description may be read with the radio base station. In this case, the functions that the above-mentioned user terminal 20 has may be the configuration that the radio base station 10 has.

In the present Description, particular operation performed by the base station may be performed by an upper node thereof in some case. In a network comprised of one or a plurality of network nodes having the base station, it is obvious that various operations performed for communication with the terminal are capable of being performed by the base station, one or more network nodes (e.g., MME (Mobility Management Entity), S-GW (Serving-Gateway) and the like are considered, but the invention is not limited thereto) except the base station, or combination thereof.

Each Aspect/Embodiment explained in the present Description may be used alone, may be used in combination, or may be switched and used according to execution. Further, with respect to the processing procedure, sequence, flowchart and the like of each Aspect/Embodiment explained in the present Description, unless there is a contradiction, the order may be changed. For example, with respect to the methods explained in the present Description, elements of various steps are presented in illustrative order, and are not limited to the presented particular order.

Each Aspect/Embodiment explained in the present Description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Registered Trademark) (Global System for Mobile communications), CDMA 2000, UMB (Ultra Mobile Broadband), IEEE 802.11 (Wi-Fi (Registered Trademark)), IEEE 802.16 (WiMAX (Registered Trademark)), IEEE 802.20, UWB (Ultra-WideBand), Bluetooth (Registered Trademark), system using another proper radio communication method and/or the next-generation system extended based thereon.

The description of "based on" used in the present Description does not mean "based on only", unless otherwise specified. In other words, the description of "based on" means both of "based on only" and "based on at least".

Any references to elements using designations of "first", "second" and the like used in the present Description do not limit the amount or order of these elements overall. These designations are capable of being used in the present Description as the useful method to distinguish between two or more elements. Accordingly, references of first and second elements do not mean that only two elements are capable of being adopted, or that the first element should be prior to the second element in any manner.

There is the case where the term of "determining" used in the present Description includes various types of operation. For example, "determining" may be regarded as "determining" calculating, computing, processing, deriving, investigating, looking up (e.g., looking up in a table, database or another data structure), ascertaining and the like. Further, "determining" may be regarded as "determining" receiving (e.g., receiving information), transmitting (e.g., transmitting information), input, output, accessing (e.g., accessing data in memory) and the like. Furthermore, "determining" may be regarded as "determining" resolving, selecting, choosing, establishing, comparing and the like. In other words, "determining" may be regarded as "determining" some operation.

The terms of "connected" and "coupled" used in the present Description or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. For example, "connection" may be read with "access". In the case of using in the present Description, it is possible to consider that two elements are mutually "connected" or "coupled", by using one or more electric wires, cable and/or print electric connection, and as some non-limited and non-inclusive examples, electromagnetic energy having wavelengths in a radio frequency region, microwave region and/or light (both visible and invisible) region, or the like.

In the present Description or the scope of the claims, in the case of using "including", "comprising" and modifications thereof, as in the term of "provided with", these terms are intended to be inclusive. Further, the term of "or" used in the present Description or the scope of the claims is intended to be not exclusive OR.

As described above, the present invention is described in detail, but it is obvious to a person skilled in the art that the invention is not limited to the Embodiments described in the present Description. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2016-192023 filed on September 29, 2016, entire content of which is expressly incorporated by reference herein.

## Claims

1. A user terminal comprising:
a control section that determines a resource of a given common search space based on information on a resource amount of the common search space; and
a receiving section that monitors a downlink control channel in at least a part of the resource of the given common search space.

2. The user terminal according to claim 1, wherein the receiving section receives the information on the resource amount included in at least one of broadcast information and a random access response.

3. The user terminal according to claim 1 or 2, wherein based on the information on the resource amount, the control section determines that the resource of the given common search space is comprised of a plurality of discontiguous resources.

4. The user terminal according to any one of claims 1 to 3, further comprising:
a transmitting section that transmits a random access preamble, wherein the control section uses information used for transmission of the random access preamble as a basis to determine the resource of the given common search space to monitor.

5. The user terminal according to any one of claims 1 to 4, wherein during a random access procedure, the control section uses multiple information on the resource amount as a basis to determine respective resources of different common search spaces.

6. A radio communication method of a user terminal, including:
determining a resource of a given common search space based on information on a resource amount of the common search space; and
monitoring a downlink control channel in at least a part of the resource of the given common search space.
